# EUROPEAN PATENT APPLICATION

(11) **EP 4 462 758 A1**
(43) Date of publication of application: **13.11.2024**
(21) Application number: 23172570.6
(22) Date of filing: 10.05.2023
(51) Int. Cl.: H04L 67/63, H04L 67/60, H04L 67/50, H04L 67/51, H04L 67/52, H04L 67/56, H04L 67/562, H04W 64/00, H04W 88/02, H04L 67/10, H04L 67/1001, H04L 67/1021, H04W 4/02, H04W 36/00, H04L 41/50, H04W 88/18, H04L 9/40

(54) **TECHNIQUES TO PROVIDE NETWORK-RELATED SERVICES**

(71) Applicant: Deutsche Telekom AG, 53113 Bonn (DE)
(72) Inventor: SCHNEIDER, Daniela, Wien (AT)
(74) Representative: Braun-Dullaeus Pannen Emmerling Patent- & Rechtsanwaltspartnerschaft mbB

(57) **Abstract**

A method for providing a service to a user equipment, the service being provided by a network operator and/or a service provider, the method comprising the steps of:
• Providing a communication link between a network of a network operator and a UE;
• Transmitting a service request of a UE to a network operator, wherein the service request comprises i) location information of the UE and/or ii) network information of the UE;
• Using the i) location information of the UE and/or ii) the network information of the UE to determine the location where to instantiate the service or to determine the location of an already instantiated service that shall be used.

## Description

The invention relates to a method, communication system, a service controller and a User equipment to provide network-related services, in particular to techniques where such a service shall be instantiated.

In current network registration procedures, a device of the user like a user equipment (UE) registers to a selected network in the following way to use a service: the service request is being done 'over-the-top' after a successful network registration procedure in a further process. The further process of the service request is being completely decoupled from the network registration process and completely decoupled from the network operator and done within the service layer of the network.

Those services can be requested by contacting a service broker functionality or by contacting the service directly. For both options, the communication address, in particular the IP-address, of the service needs to be known to the user equipment in advance. Currently, a user needs to configure or enter this communication address manually, for example by configuring the IP address, an URL, a FQDN or the like.

Today, a device requests the service by sending a service request message towards a service proxy or a service node, in particular of a service provider. Current request messages contain parameters like a service ID, a service category, an ID of a requestor, and optionally additional parameters that can specify the service. Typically, the location of such services is independent of the service request. The so-called service location protocol "RFC 2165" exists that provides a scalable framework regarding the discovery and selection of already existing (network) services. Using this protocol, computers using the Internet do not need so much static configuration overhead regarding (network) services because the services can be discovered on demand. This is especially important as computers become more portable. This service location provides a dynamic configuration mechanism of a user equipment (UE) for applications in local area networks. However, this solution does not provide an efficient means to initially set up the service in a network.

In the view of above, it is an object of the present invention to provide techniques in order to efficiently set-up and/or efficiently provide services accessible of a network, in particular network related services.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

In the context of the invention the following definition applies. If the invention talks about a network based service, this is to be understood as being a service that is made available via the network. Such a service can run on a server of a network operator and/or service provider and/or on a UE of a User, for example as an APP or as a service accessible over a web-interface.

According to a first aspect of the invention, a method for providing a service to a user equipment is disclosed, wherein the service is being provided by a network operator and/or a service provider. In particular, within the context of Service Federation - that will be described in the following - it is possible that services can be provided and/or instantiated at different locations, different functional units and/or different operators and or providers that means beyond the borders of the providing network. Basically, this serves the purpose to provide a very flexible and dynamic communication environment. The method comprising the steps of:
- providing a communication link between a network of a network operator and a UE;
   ∘ typically, this is the communication link to which the UE is being attached to. This can be a mobile communication link, a Wi-Fi communication link and/or a fixed line communication link;
- transmitting a service request of a UE to a network operator, wherein the service request comprises i) location information of the UE and/or ii) network information of the UE;
   ∘ the service request can be transmitted to a network controller of the network operator or to a service controller of the network operator, in particular within a network federation environment. The location information of the UE and/or the network information of the UE can be assessed by the UE and transmitted to the network operator using dedicated communication protocols or using an extension of already existing communication protocols;
   ∘ network information of the UE describes the properties and/or IDs of networks that are available to the UE at its current location; typically, the UE can also gather information about available networks even if the UE is actually being attached to another network; such network information can be of the home network of the UE or of visited network or of a WLAN environment;
   ∘ the service request can be related to applications running on the UE and/or within the network, like financial transaction apps, video streaming apps, computational tasks, and/or communication tasks or the like;
- using the i) location information of the UE and/or ii) the network information of the UE to determine the location where to instantiate the service or to determine the location of an already instantiated service that shall be used.
   ∘ the location where to instantiate the service or to determine the location of an already instantiated service that shall be used can comprise the kind of functional unit that shall be used to instantiate the service, to use functional units within a certain geographical location and/or which kind of network and/or network operator shall be used to instantiate the service; in that sense, the term location is not limited to a geographical meaning;
   ∘ the determination can be performed by a dedicated algorithm that can be implemented by the network operator within his network, in particular within the service controller of the network operator; in principle, it is possible that the algorithm uses a trained artificial intelligence engine to determine the best location where to instantiated the service or which already instantiated service shall be used;
   ∘ service instantiation basically means to set up the service as it will be explained in the following within the context of service federation;
   ∘ the information where to instantiate the service can be created and outputted so that it can be forwarded to other functional units within the communication system;

This provides the advantage that for the first time location information and/or network information of the UE are taken into account when considering which already instantiated service shall be used and/or where to instantiate the service. This has the effect of providing a very flexible and dynamic communication environment that can be adapted to the needs of the customer and at the same time to the needs of network operator. For example, depending on available network resources, the network operator can decide to instantiate the service close (with respect to communication path length) to the user if sufficient network resources are being available at this location or to instantiate the service further away from the user at a location in which sufficient network resources are being available to run the service. The determination of the location can also comprise environmental aspects, for example if it is possible to run the service with renewable energy resources at a certain location. In general, regarding energetic considerations it is most beneficial to provide the service as close as possible to the user.

In an embodiment, the service is instantiated within a network federation environment.

The concept of network federation environment provides the advantage that the service can be instantiated and/or located in a flexible way within a network of the home network operator or a further network operator or even within a communication environment of a service operator and can still be addressed by the network to which the UE is currently being attached to.

In an embodiment, the network operator is a home network or a visited network operator. The service request can be transmitted to a service controller, wherein the service controller is associated to the home or to the visited network.

This provides the advantage that the service can be used and/or instantiated if the UE is being attached to the home network or to the visited network operator. In particular, a service controller of the visited network can handle the service request directly or forward it to the service controller of the home network. Within the context of network service federation, it is beneficial to transmit the service request to the service controller because all the relevant information regarding services are being hosted and managed by the service controller. Hence, the service controller is being the best suited authority to determine where to instantiate the service or to determine the location of an already instantiated service that shall be used. The service controller can be implemented on a server of the network operator. The service controller can also comprise an interface to the network layer of the network as to gain knowledge about available computational functional units and/or network resources within the network.

In an embodiment, the service request comprises service information, and wherein the service information is taken into account regarding the decision where to instantiate the service or which already instantiated service shall be used. In particular, the service information can comprise QoS requirements of the service, a service ID (as well as the kind of service) and/or a trust relation of the service. The trust relations can comprise security measures and/or a required security level regarding the service.

This provides the advantage that the decision regarding the location can also depend on the kind of service. As stated before, the term location is being meant in a very broad technical sense. That means that the service can be located within a certain trusted environment that matches to the required security level. This can also mean that the service can be located at a server or within a certain network environment that is able to provide a required QoS level for the service - additionally, this server can also be located at a certain geographical region or belong to a dedicated network. Within the context of the invention, location also means at which network operator, service provider and/or type of network the service is being located. For example, depending on the kind of service, it is possible to instantiate the service within a 4G, 5G, 6G and/or a WLAN environment.

In an embodiment, the i) location information of the UE and/or ii) the network information of the UE comprises GPS data of the UE.

This provides the advantage that the GPS data can be used to assess the geographical location of the user and to instantiate the service and/or to determine the location of an already instantiated service close (in terms of a communication path length) to the user. Additionally, the GPS information can also be used to assess in which country the UE of the user is being located and which networks and/or network operators are being available at this current location. For example, based on this information the network operator can assess that the user is currently being located in the town of Wien in Austria and that at this geographical location a 5G network is being available in which the service can be instantiated. It is even possible that the location of the service dynamically follows the location of the UE as it moves. In that sense the GPS location can be monitored. A possible time interval to trigger a new instantiation location due this "following procedure" can be 15 minutes or one hour. This can depend on the speed of the UE.

In an embodiment, the i) location information of the UE and/or ii) the network information of the UE comprises used types of networks by the UE and/or available types of network for the UE. The UE can access information about the network to which it is currently the connected to and/or which networks are being available at its location. Additionally, the UE can determine the kind of networks like if it is a 4G, 5G, 6G or a Wi-Fi network or a WLAN network. In principle, each of those different network types provides different QoS values and/or security measures.

This provides the advantage that the decision about the location where to instantiate the service or to determine the location of an already instantiated service that shall be used can be based on those parameters. For example, if the best possible security measures and QoS values are being required for a certain service, the service can be instantiated within the 5G or the 6G network at a functional unit close to the user. Is also possible to request certain QoS classes.

In an embodiment, the i) location information of the UE and/or ii) the network information of the UE comprises network IDs. In addition, UUID values, mobile network code or a mobile country codes can be used to assess if the UE can communicate over a trusted network. This also enables the possibility to steer the communication to a trusted partner of the home network operator, wherein the service can be instantiated at the trusted partner.

In an embodiment, the i) location information of the UE and/or ii) the information of available networks comprises cell information. The cell information can be used to assess the capabilities of the cell and/or the capacity of the cell. This enables that the service can be instantiated at a location that matches the properties of the cell to which the UE is being connected to. For example, if the UE is being connected to a cell that only provides a 4G communication technique, the service can be instantiated within a 4G communication environment.

In an embodiment, a blacklist, in particular a location blacklist or a network blacklist, is taken into account regarding to determine where to instantiate the service. The location blacklist lists certain geographical regions, for example countries, in which the service shall not be instantiated, for example because these countries have different regulation requirements or the data security measures are not in accordance with the policy of the network operator. The network blacklist comprises in particular networks that are not-trustworthy.

This provides the effect that the service can run in a secure environment that ensures data protection for the user. In particular, different services can require different security levels. For example, a banking transaction app will in general require higher security standards than a video streaming app.

In an embodiment, the service, the UE and/or the network operator provides the blacklist.

This provides the effect that the blacklist can be generated in a very flexible way according to different needs. In particular, the user can specify the blacklist on his UE.

In an embodiment, the service is instantiated at a location as to optimize resources of the network operator, to full fill required QoS and/or to fulfill trust relation requirements.

For example, it can be evaluated based on i) location information of the UE and/or ii) the network information that the user equipment has only access to a network that only provides 1 Mbit/s then it is not necessary to instantiate the service within the network to provide 100Mbit/s. If the service demands certain QoS requirements and if the network to which the UE is connected to is in principle capable of delivering those QoS values that the service can be instantiated in a location within the network to provide these QoS requirements for example within 5G core or 6G core. If trust relation requirements shall be fulfilled this can lead to the decision not to instantiate the service at a certain service provider, network provider or within a certain country.

In an embodiment, the i) location information of the UE and/or ii) the network information of multiple users requesting the service are taken into account to determine the location where to instantiate the service.

For example, if multiple users require a certain QoS value, in particular a maximum latency, then the service can be instantiated at a location within the network between those multiple users so that the mean or median latency value for all of those users is being minimized. Other criteria for multiple users can be as to minimize the mean or median communication path lengths for the users or to minimize the overall computational overhead of the network.

According to a second aspect of the invention, a service controller for providing a service to a user equipment is disclosed, wherein the service controller comprises:
- a first communication interface to a network layer of the network operator;
- a second communication interface to a service layer, in particular a service layer of the network operator;
- a third communication interface to a user equipment, and wherein the service controller is arranged
- to receive a service request of a UE to a network operator, wherein the service request comprises i) location information of the UE and/or ii) network information of the UE;
- to use the i) location information of the UE and/or ii) the network information of the UE to determine the location where to instantiate the service or to determine the location of an already instantiated service that shall be used. Preferably, a dedicated algorithm is being implemented on the service controller to perform the determination step. In principle, it is possible that the algorithm is being based on lookup tables so that certain location information and/or network information are related to another column of the table which states where to instantiate the service. However, the algorithm can also comprise functional parts and/or a trained artificial intelligence engine. The artificial intelligence engine can be trained by providing certain combinations of i) location information of the UE and/or ii) the network information scenarios to a neural network and indicating to the neural network where the service shall be instantiated based on this scenario.

The service controller provides analog advantages as already discussed within the context of the inventive method. However, it is a further advantage that the service controller according to the invention typically manages all service related tasks of the network operator and has access to the network layer and the service layer so that it seems to be the most preferred functional unit to determine where to instantiate the service as the service controller has access to all the relevant information and the necessary interfaces.

According to a third aspect of the invention, a user equipment is disclosed that is configured to participate to the inventive method, wherein the user equipment is designed to at least send a service request of a UE to a network operator, wherein the service request comprises i) location information of the UE and/or ii) network information of the UE.

If a first communication address of the service controller is stored within the UE, this reduces signaling traffic within the network but it has to be ensured that changes of the first communication address are taken into account and that this first communication address is stored within the UE. As the first communication address is preferably linked to the communication operator the UE is being subscribed to, this leads to the effect that every time the UE connects to the network of a new network operator, the first communication address within the UE needs to be changed. If the first communication address is being transmitted on request by the UE, this also reduces signaling traffic and provides that always the latest version of the first communication address is being sent to the UE. However, it requires the additional requesting step of the UE. If the first communication address of the service controller is automatically transmitted when the UE registers to the network, this has the advantage that automatically the latest and correct version of the first communication is being provided to the UE. If efficiently implemented in existing registration protocols, the additional signaling traffic is very low so that its additional load to the network traffic is almost negligible. Since this option provides a clear reference point for coupling network and service information, it is more suitable for further automation procedure due to reducing the possibility of initial misconfigurations.

In an embodiment, a network controller selects among a plurality of service controllers the service controller whose first communication address it transmits to the UE according to a first criterion.

The first criteria can be i) to distribute the computational load uniformly amongst the various implementations service controllers - this has the advantage that no single service controller has to manage with all the related tasks and may suffer failure due to overloading; ii) to reduce latency - this can be done but choosing the service controller that is closest in terms of network distance to the UE. The position of the UE he within the network can be assessed based on its dial-in point which can also be named the access point; iii) cost efficiency - this can be done by selecting a service controller that is accessible by a fixed line instead of an mobile communication channel. For the purpose of performing the decision based on the criteria, a corresponding service-controller-selection algorithm can be implemented, in particular on the network controller.

In an embodiment, the service controller transmits to the UE a list of possible available services, in particular services of different types, wherein the UE selects a service from the list and transmits to the service controller the request for access to the selected service.

This has the advantage that the UE does not need to know in advance the services but that the services are actively made known to the UE what this is especially the case for new network related services. Once again, the service controller is the central managing point for all the service related information and/or tasks.

In an embodiment, the service request comprises parameters characterizing the service. Those parameters can be QoS values, encryption keys, position of the service within the network, service type or any other relevant parameters. The message can comprise a list with the respective second communication addresses of several different implementations of a similar service, wherein the UE selects one of the possible services based on the parameters. Similar service is to be understood as providing basically the same functionality but with different parameters, for example different QoS values. It is also possible that the service controller performs a pre-selection of the similar services based on a second criteria and transmits only the second communication address of the pre-selected service to the UE. Possible criteria can be i) to distribute the computational load of a service uniformly amongst the various implementations of the service, ii) to improve the Quality of Experience (e.g. reducing latency, improving bandwidth, routing policies to avoid certain networks), iii) to maximize bandwidth, iv) take cost efficiency into account and/or v) to reduce emission like the CO2 footprint.

In an embodiment, the service controller sets up or instantiates the requested service, the setting up being carried out in particular in the case that the service is not available yet. The service controller can set up the requested service in the network of the operator due to its property that it couples the network layer with the service layer. This provides the advantage that a single entity, namely the service controller, can manage all tasks that are related to services and is being able to configure the underlying network (the network provides the hardware to run a service) accordingly. Hence, the number of services can flexibly be increased and it is not necessary to provide all those services in advance so that they would waste computational and network resources. This aspect of the invention enables to set up the service just in time. It is also possible that the service is set up close in terms of network distance to the UE that requests that service, in particular the service can be instantiated on the nearest available server of the network operator, or the further network operator or the service provider.

In an embodiment, the service controller for setting up the service obtains execution-relevant information, in particular a program code of the service, from a provider of the service or an internal service database of the network operator or from a service database of another network operator.

This provides the advantage that the program code or algorithms of the new service can efficiently be made known to the service controller. In particular, this enhances the possibility to work together regarding the services with external service providers and/or further network operators. New updates, new program code and the like can easily be shared by using the service controller of the network operator. In particular service controllers from different networks can communicate which each other to share program code, communicate IP address of services, and/or distribute services and/or other relevant information needed for service management.

In an embodiment, the service is set-up in the network of the network operator or in a further network of a further network operator. This is one of the concepts of network federation that enables a more efficient way to run networks by sharing computational resources amongst the network operators. Due to this feature, it is no longer necessary that every network operator runs every requested service but that network operators can each run a subset of the requested services and that a UE that requests such a service that is not implemented within the network of its own network operator can be provided with the corresponding IP address of that service within the network of the further network operator to access this service. It is possible that the service controllers of the different networks exchange lists with each other, wherein those lists show which service is being implemented in which network and under which address it can be reached.

In an embodiment, the service is set-up in a distributed manner in the network of the network operator and/or in the further network of the further network operator.

This provides the advantage that synergetic effects between the network operators running one single service can be obtained. For that purpose, it might be beneficial to divide a certain service into different functional modular units that interact with each other so that they can provide the service together. For example, in case of a latency critical service it might be beneficial that two different base stations of two different network operators that are close to the UE work together to provide that service to the UE instead of transmitting the tasks into the core network of one single operator, where the service is being implemented and then re-transmitted to the base station. For example, such a service could be GPU based support for VR solutions, which are only available in the edge site of one operator.

According to a fourth aspect of the invention, a communication system is disclosed, wherein the communication system is being arranged to perform the steps according to the inventive method.

The inventive system basically provides the same effects and advantages as methods described above.

In the following, preferred implementation examples of the present invention are explained with reference to the accompanying figure:
- Fig. 1:: shows a service controller.
- Fig. 2:: shows a schematic overview of the location of the service controller of Fig. 1 embedded into a communication system.
- Fig. 3:: shows a possible workflow of service registration.
- Fig. 4:: shows a network registration process that includes a service request performed by a UE of the user.
- Fig. 5:: shows schematically how a service consumer can request any service by using his UE.
- Fig. 6:: shows another embodiment of the communication system.
- Fig. 7:: shows a preferred embodiment of the communication system in a nutshell.
- Fig. 8:: a method to instantiate the service according to the invention.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Before going into details using the figures, in a nutshell, the invention can be explained as follows:
A service controller according to an aspect of the invention is configured to enable a service federation in the network of a network operator as well as to a network of a third-party operator. For that purpose, the service controller can be a central entity within these networks and being designed to host and to manage services and to make the available services known to users and/or to other service controllers. The process of making available services known to other service controllers, in particular to other service controllers of the network of the third-party operator is called "federation".

One aspect of the invention is the coupling of a network registration of the device to the provision of a first communication address of the service controller to the UE of the user by the network. This means that existing network registration processes can be extended with the provisioning and the exchange of the communication endpoint of the service controller, in particular of the nearest available service controller. The invention can be configured to work in a 3GPP -based network, in a public and or private WLAN, and/or in any other current or future network.

Once the user equipment has registered successfully to the network, it can contact the service controller because it has received the first communication address of the service controller during the registration process. The UE can interact in various ways with the service controller. For example, it can exchange service information and/or initiate service requests. The service controller can have knowledge about all available services, about their network requirements, their configuration, authorization requirements, and/or LCM requirements.

A service in the context of the invention can be a service for an end customer that is provided either by the network of the operator, the infrastructure or by a piece of software like an app. It is also possible that the service can be a managed resource of the network of network operator, the customer wants to use, like a computational resource to run the dedicated software job or a dedicated network connection with special requirements (for example specific QoS requirements) that are needed to run the service. Possible examples for such a service are can be to allow a UE to access a specific VPN which is isolated from the general network space.

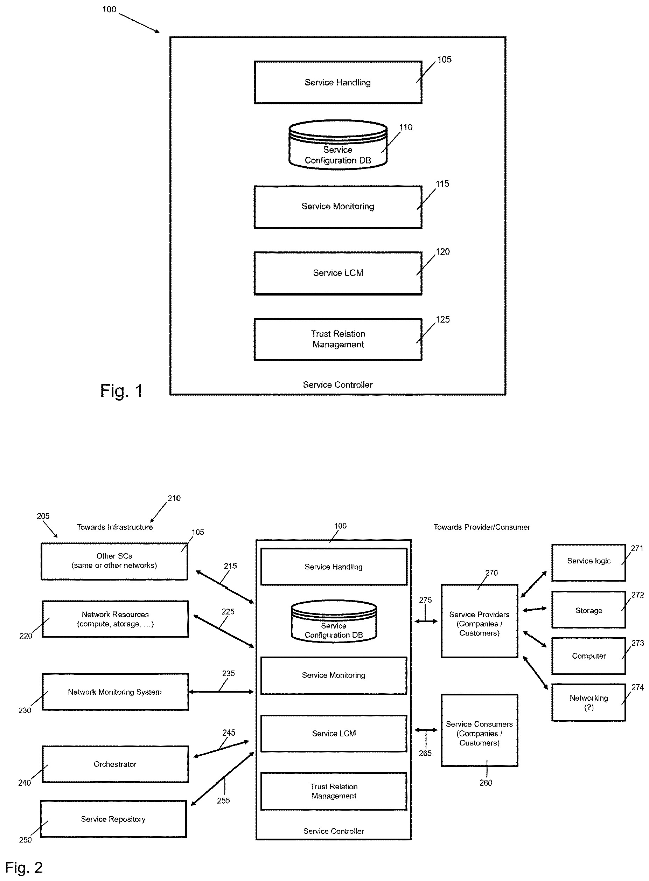

Fig. 1 shows a service controller 100 according to the invention. The service controller 100 can perform the steps according to the inventive method as a functional unit or the service controller can comprise dedicated functional units to perform the steps according to the inventive method.

As it will be explained in further detail, the tasks of the service controller 100 can be to manage and control services. In particular, the service controller 100 is configured to perform i) service registration and/or service de-registration; ii) handling of service requests; iii) hosting and/or providing of data that are related to the services; iv) handling updates of service data; v) trust relation management; vi) scheduling of requested services and tasks; vii) further control and management functionalities; viii) monitoring the status of the services and/or ix) notifying 3rd parties about LCM events of the services.

The service controller 100 can comprise the following dedicated functional units to perform those steps:
A service handling engine 105: the service handling engine 105 is configured to control service management processes like registration, de-registration, service capability changes, service requirements changes, and/or etc. All changes (or updates) regarding service capabilities, network requirements (QoS values), LCM and/or security aspects can be controlled by the service handling engine 105 and can be sent to other entities within a communication network or to other engines of the service controller 105 as needed. The service handling engine 105 can also be configured to update relevant parameters regarding a respective service to a service configuration database 110.

The service configuration database 110: The service configuration database 110 can be a master database for storing parameters that are relevant with respect to the provided services. Sometimes, the service configuration database 110 is simply be named a service database 110 throughout this text. It can comprise information about all instances of a service that are implemented within the network. This can comprise information about the location where the service is implemented, wherein this location information can be used to assign a service request to the location of the respective service that is closest to the requester (if there are multiple locations where the service is implemented). This information can be the second communication address. This can also comprise information about the network and/or the network operator - information about the network can be used to set up a data path of the corresponding standard and/or protocol (like xDSL, 5G, 6G, Wifi) between the requester and service. The information about the network operator can be used for questions about authorization and/or encryption management. It is also possible that the information include time and/or duration information of the instantiation.

The service controller can also comprise a notification engine that informs about service related LCM events.

The service configuration database 110 can also comprise information about capabilities of at least a subset of the services. These capabilities can comprise the following information: i) is the service related to a network service or to an end customer service - this information can be used to distinguish the respective services by the service handling engine 105 and to set up and/or to provide appropriate communication resources; ii) information about the service category of the service, like if the service relates to a financial service, location service, look up service, sustainability parameters etc. - this information can be used to set up and/or to provide appropriate communication resources and/or to apply appropriate encryption schemes; iii) information about parameters of the service that can be customized by the end user (the requester) - by having the knowledge of those parameters, the end user can tailor the service as best as possible to his needs; iv) information about the client software of the service for the end device of the end customer - this information can be provided together with a corresponding link to the client software so that the end user gets knowledge if he can use the service in a most convenient way by the client software of the service; v) information about scheduling capabilities and/or scheduling requirements. These can be information like if there is a dedicated scheduling plan for the service existing, like a deadline when the service or the task has to be finalized. Information if the service can be run outside busy-hour times of the network. Information like requirements on energy-saving aspects of the requested service - this information can be used by the operator to detect failure, if a service or task is not being finalized within the deadline or this information can be used to set up the service outside with busy-hour times or to apply certain energy saving routines.

The service database 110 can also comprise information of network requirements of the service that comprise: i) information about the access networks that can be used; ii) information about the QoS values that are needed to offer the service; iii) information about specific network requirements like if a URLLC is necessary for the service; iv) information about specific security demands related to the service and/or sustainability information/certificates. This information can be used to configure the service accordingly within the network so that it can actually provide the required QoS values.

The service database 110 can also comprise lifecycle management (LCM) information of the service that can comprise: i) information if the service is already instantiated; ii) information if the service was being instantiated 'on demand", including how long it will take until the service will be available; iii) information regarding the maximum allowed period of time the service can run in a visited network any other information;

The service database 110 can also comprise information about the service provider, e.g. if the service provider is the network operator itself or a third party.

Network entities of the communication network and/or the end consumer, in particular authorized network entities and/or the authorized end consumer, can retrieve any of this information regarding the service from the service database 110. Such network entities can be servers, access nodes, management elements, network elements and/or an UE of the end customer. It is also possible that, in particular the service controller, sends any of this information to the network entities and/or the end consumer, in particular sends any of this information actively to authorized network entities and/or to authorized end consumers.

New services can register at the service controller (SC) to make themselves available to end consumers, other services and the network of the operator.

Service monitoring engine 115: the service monitoring engine 115 is configured to assess the status and/or the workload of instantiated services. The service monitoring engine 115 can monitor those services no matter if the services are instantiated in the network of the communication operator or in a third party network, in particular a network of a further communication operator. In particular, the status is a health status of the service. In case it cannot be ensured that the service runs smoothly, for example due to overload situations, the monitoring engine 115 can inform the service handling engine 105 accordingly and can trigger appropriate actions toward other engines and/or network entities depending on the particular situation. For example, computational resources can be scaled accordingly in order to ensure that the service can provide the required QoS will use. It is also possible that already existing instances are being re-deployed.

Service lifecycle management engine 120: the service lifecycle management engine 120 is configured to perform the instantiation of the service, graceful shutdowns scenarios and updates of the instantiated services and all relevant procedures needed for LCM of a service.

Trust relation management engine 125: the trust relation management engine 125 is configured to ensure secure communication between the parties of the communication. Those parties can be the service, the service provider, the end customer, the service controller 100, networks, network operators, network management systems, and/or UE. The trust relation management engine is configured to authorize communication parties that requested service, to authorized service consumers. The trust relation management engine 125 can also be configured to authenticate and/or authorized service providers.

The trust relation management can be done in an automated way to allow safe and fast establishment of a secure communication between the entities. The trust relation management can be enabled across different networks and operators to allow service federation not only in the own network of the network operator but also to customers using partner and/or third party networks.

Fig. 2 shows a schematic overview of the location of the service controller 100 embedded into a communication system 200. The communication system comprises a network infrastructure 210, in particular a core network infrastructure 210, of network operator 205. The service controller 100 can belong to the network operator 205.

The network infrastructure 210 of the network operator 205 can comprise:
i) further service controllers 100a that can be distributed in various locations within the network, in particular close to the edges of the network so that the computational load of the service controllers 100a due to requests of the users is evenly distributed and latency can be reduced. The service controllers 100, 100a can communicate with each other by using a fourth communication interface 215. The service controllers 100, 100a can exchange information about relevant parameters of the services. This exchange of information can trigger an update of the service database 110. It is also possible that the service controllers 100, 100a distribute the monitoring tasks among each other. It is also possible that at least a subset of the further service controllers 100a belongs to a further network operator.
ii) network resources 220 like computing processes and/or storage means. The service controller 100 can communicate with the network resources 220 by using the second communication interface 225.
iii) network monitoring system 230. The service controller 100, in particular the service monitoring engine 115, can exchange data with the network monitoring system 230 via a third communication link 235.
iv) an orchestrator 240, wherein the orchestrator 240 communicates with the service controller 100 via a fourth communication link 245.
v) a service repository 250, wherein the service repository is configured to provide the services and communicates with the service controller 100 via a fifth communication link 255. It is the functionality of the service repository 250 to store and/or provide software packages that are needed to run and/or instantiate the service. The Service LCM 120 can then, on request, make use of these software packets, configure and instantiate them.

The communication system 200 can further comprise:
- an end user, so-called service consumers, that can request those services for example by using their user equipment 260 (UE) or web interfaces that are provided to use the various services. The service consumers communicate with the service controller 100 via a third communication interface 265.
- a service provider 270, wherein the service provider 270 can be a third party, like a company or a customer of the network operator 205. It is also possible that the service provider 270 is the network operator 205 itself or a further, that may also be called a second, network operator 270. The service provider 270 can provide a service logic 271, storage means 272, computational means 273, networking functionalities 274 and/or a further service controller. The service provider 270 communicates with the service controller 100 via a fifth communication link 275.

Within the communication environment, the service controller 100 can be configured to search for certain services, in particular in the further service controller 100a, in case a requested service is not available in the service controller 100.

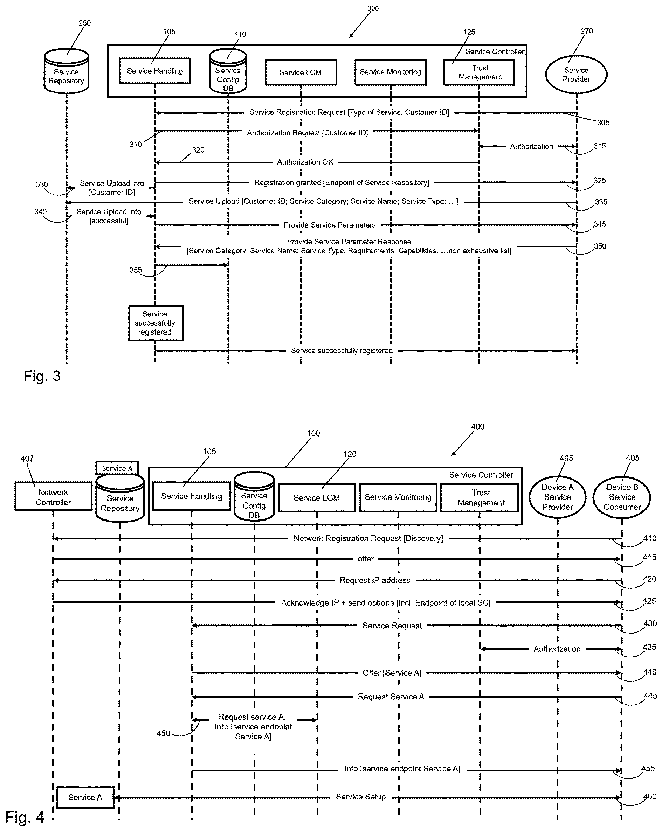

Fig. 3 shows a possible workflow 300 of service registration according to the invention. For that purpose, the service controller 100, the service repository 250 and the service provider 270 can communicate with each other and perform the following steps:
Step 305: the service provider 270 performs a service registration request including information about the type of service and its customer ID and potentially additional parameters which may be of interest towards the service handling engine 105 of the service controller 100.
Step 310: the service handling engine 105 performs an authorization request towards the trust management engine 125 by providing the customer ID of the service provider to the trust management engine 125.
Step 315: the trust management engine 125 performs an authorization process by exchanging information with the service provider 270.
Step 320: if the authorization process was unsuccessful, the service registration process is being stopped. If the authorization process was successful, the trust management engine 125 signals a successful authorization process towards the service handling engine 105.
Step 325: the service handling engine 105 allows the service registration to the service repository 250 as illustrated in step 330. However, means need to be provided to find the software and/or further relevant data of the service within the service repository 250. Hence, the repository address of the software and/or the relevant data of the service within the service repository 250 are set and can be made known to further SCs 100 and/or the user. If the service is to be requested, this enables that the necessary software for the service can be retrieved in order to instantiate the service on a server of the network operator or a further network operator and/or of the service provider. On that server, the service can be reached under its second communication address. This second endpoint address can be communicated to the service consumer 270 so that he is able to access and to reach the registered service if the service shall run in the network infrastructure 210 of the network operator 205. It is also possible that the service can run in the network of the service provider 270. In this case the service provider can provide the second endpoint address of the service to the service controller 100 so that the service controller can communicate this endpoint address to the end-users that request the service via the network operator 205.
Step 330: the service software is being set up stored in the service repository 250 under the repository address. As explained before: The service repository 250 can be part of the network of the network operator 205 or of the service provider 270. It is also possible that the service is set up in the service repository 250 under the second endpoint address and that this endpoint address is then communicated to the service handling engine 105. In this case, server functionalities are being provided by the service repository 250. In addition, the service handling engine 105 communicates service upload information, including the customer ID of the service provider, to the service repository 250.
Step 335: the service provider 270 performs a service upload towards the service repository 250, wherein the service upload comprises information about the customer ID, the service category, service names, service type and/or etc.
Step 340: the service repository 250 signals a successful service upload to the service handling engine 105.
Step 345: the service handling engine 105 communicates service parameters to the service provider 270. The service provider can state explain how the service can be categorized, which criteria it fulfills (e.g. QoS), which capabilities it exposes, which requirements towards other services it might have.
Step 350: the service provider 270 answers with a "provide service parameter"-response that can comprise information of the service category, service name, service type, service requirements, and/or service capabilities to the cells handling engine 105.
Step 355: the service handling engine 105 stores the "provide service parameter"-response information in the service configuration database 110.

After step 355 the service has been successfully registered and in step 340, the message of a successful service registration can be sent from the service handling engine 105 to the service provider 270.

Hence, the service registration request provides all necessary information (e. g. Configuration, lifecycle management information, certificates, etc...) Towards the service controller 100. The service controller accepts or denies the registration request and sends a respective message back.

Services that are no longer available can be de-registered or can be marked as not being available after a certain period of time. De-Registration means, that the service is not available in the database anymore. So it cannot be instantiate/requested.

Fig. 4 shows a network registration process that includes a service request performed by the user with his user equipment 405.

The user, who can also be called the end consumer, wants to use a certain service. For that purpose, he uses his user equipment 405 that can be a computational unit like a computer, a smart phone or the like.

Step 410: the user connects with his UE 405 to the communication network of the network operator 205 and performs a network registration request after the network was discovered by his UE 405 towards a network controller 407 of the network operator 205.

Step 415: the network controller 405 offers the corresponding network access to the UE 405.

Step 420: According to a DHCP protocol, the UE 405 confirms to the network controller 407 that it wants to make use of the offered network address (IP) based on this confirmation the network controller 407 acknowledges the request.

Step 425: the network controller 407 acknowledges the IP towards the user equipment 405 and sends options to the user equipment 405 that include the endpoint address (IP address) of the local service controller 100.

After the UE 405 has received the IP address of the service controller 100, the UE 405 can directly transmit requests to the service controller 100.

Step 430: the UE 405 performs a service request for a certain "service A" towards the service controller 100. In particular, the UE retrieves the information which services are being available. It is also possible to perform this step by means of an service announcement signaled by the SC 100.

Step 435: the trust management engine 125 and the UE 405 exchange data to perform an authorization process.

Step 440: if the authorization process was successful, the service handling engine 105 offers the "service A" to the UE 405. It is possible that the message that includes the offering of the "service A" also comprises relevant parameters concerning the "service A" like QoS values or the like. The service handling engine 105 can retrieve this relevant parameter information from the service database 110.

Step 445: now the UE 405 can effectively request the "service A" towards the service handling engine 105. Preferably, together with a corresponding set of relevant parameters that correspond to the relevant parameters that were transmitted to the UE 405 in step 440. This request can also include position information of the UE 405, like GPS data or the dial-in point of the UE 405 in the network.

Step 450: the service handling engine 105 and the service lifecycle management engine 120 negotiate the service request A. The service handling engine 105 and the lifecycle management engine 120 can exchange information about the service endpoint of "service A" among each other. The service endpoint, also called the second communication address, can be the IP addresses of the entity on which the service is instantiated are implemented. If the service A is being instantiated or implemented on more than one entity within the network, criteria can be applied choose a certain implementation of the service. Possible criteria can be i) to distribute the computational load of "service A" uniformly amongst the various implementations of service A. In that case, the IP address can be the one of a location in which the service A is provided but not used; ii) to reduce latency. This can be done by choosing the IP address of service A that is the closest to UE 405. This selection can be done by analyzing the position information of the UE 405. iii) maximum bandwidth or iv) cost efficiency. With respect to cost efficiency is more beneficial for the network operator to use an instantiation of service A that is connected to the network via a fixed line like xDSL rather than via mobile communication link.

The service lifecycle management engine 120 may also dynamically instantiate a new instance for service A in order to fulfill the request for service A issued by the UE 405.

Step 455: the service handling engine 105 sends the information about the second communication address of the service A to the UE 405.

Step 460: by using the second communication address of the "service A", the UE 405 can now contact the service A so that the UE 405 and the "service A" can set up the service and run it accordingly. The service A can be implemented within the network of the network provider 205 or it can be implemented on a server 465 of the provider of service A.

Within the context of Fig. 4, the UE 405 has already knowledge about the service A and requests this service in a targeted matter.

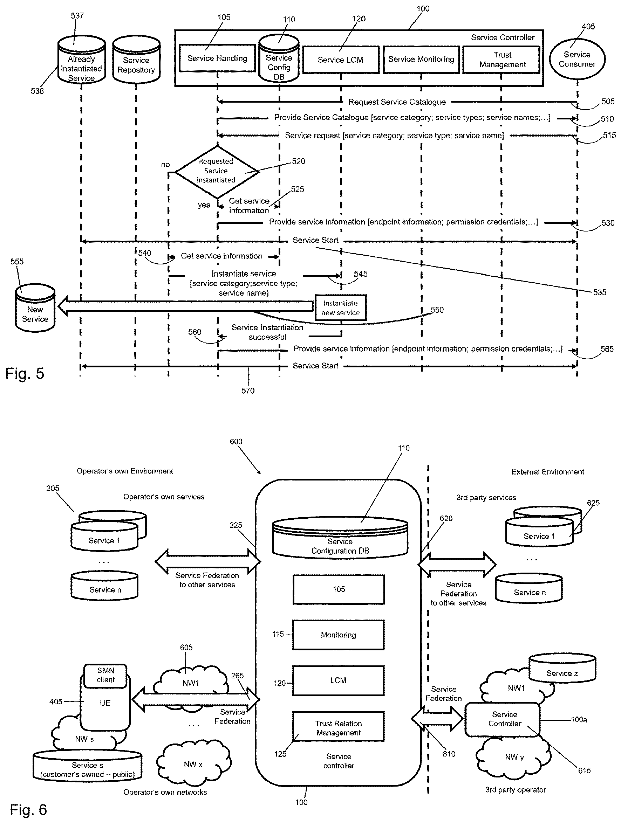

Fig. 5 describes the situation in which the service consumer can request any service by using his UE 405. In particular, the available services are first made known to the UE 405 when the UE 405 is communicating with the network operator.

The UE 405 can perform the steps 410, 415, 420 and 425 to receive the IP address of the service controller 100 as shown in Fig. 4.

Step 505: the UE 405 can send a "request service catalog" message to the service handling engine 105 by sending it to the IP address of the service controller 100 or the service handling engine sends the service catalogue by itself after successful registration of the customer (`federation').

Step 510: the service handling engine 105 then provides a service catalog that lists the available services to the UE 405. The message of the service catalog can also comprise information about the different service categories, service types, service names, etc.

Step 515: The user of the UE 405 or the UE 405 selects one of these services and performs a corresponding service requests, there in the service request can comprise the service category, the service type and/or the service name.

Step 520: the service handling engine 105 then checks if the requested service is already instantiated. If it is instantiated, the workflow continues with step 525. If the service is not yet instantiated, the workflow continues with step 540.

Step 525: the service handling engine 105 exchanges information about the requested service with the service database 110.

Step 530: the service handling engine 105 provides service information like endpoint address information, the credentials, etc. to the UE 405. As explained within the context of Fig. 4, the UE 405 can provide its position information so that the address information of the service can be selected by applying one of the criteria described above. Possible criteria can be i) to distribute the computational load of "service A" uniformly amongst the various implementations of "service A". In that case, the IP address can be the one of a location in which the "service A" is provided but not used; ii) to reduce latency. This can be done by choosing the IP address of "service A" that is the closest to UE 405. This selection can be done by analyzing the position information of the UE 405. iii) maximum bandwidth, iv) cost efficiency and/or v) sustainability related aspects.

Step 535: the UE 405 uses the address information, i.e. the second communication address, of the already instantiated service 537, for example the service is being implemented on a server 538, to start the selected service.

Step 540: the service handling engine 105 exchanges information about the requested service with the service database 110.

Step 545: the service handling engine 105 requests to instantiate the selected service towards the service lifecycle management engine 120. This request can comprise the service category, the service type, service name and/or required QoS values.

Step 547: Interaction between the service repository and the service LCM 120, wherein where the Service LCM 120 retrieves all software and/or assets needed to instantiate a new service from the service repository.

Step 550: the service handling engine 105 instantiates the selected service as a new service 555. More specific, the service LCM 120 instantiates the selected service.

Step 560: the service lifecycle management engine 120 signals a successful service instantiation to the service handling engine 105.

Step 565 corresponds to step 530 and step 570 corresponds to step 535. Hence, Fig. 5 shows how any available service can be selected and started by appropriate information exchange between the service controller 100 and the UE 405.

The modular approach of the service controller 100 has the advantage that modular approaches have the advantage that the individual functional units can be better separated from each other, which is advantageous in terms of programming and maintenance - also with regard to the installation of updates.

Information about the service can be hosted and managed together with relevant parameters, requirements, and/or other information in the service controller 100, in particular in the service database 110.

Configuration data of the different services can comprise parameters to categorize the services with regard to different levels, e.g. end customer service, network service, infrastructures service, etc. is also possible to define further subcategories like if the service relates to a health service, financial service or a gaming service.

The service data that are stored in the service controller 100, in particular stored in the service database 110, can be:
- configuration data: that is the schemas and constrains for any of parameters that need to be preconfigured at instantiation of the service that can comprise addressing information, naming parameters, etc. the configuration data can also comprise information about which customer ID/UE ID is allowed to use the service;
- requirements of the service: QoS values, routing information, information about past management, latency requirements, security requirements and/or etc.
- lifecycle management related data: information if it is allowed to instantiate the service in a third-party network; information how to proceed if the service is inactive, for example if it is not used by customers for a certain time period; information about lifecycle event realted policies;

Handling of updates of service data: updates from the service provider, wherein the service provider can be the network operator or a third party, towards the service controller 100 may be performed in cases of changes of service: in case parameters regarding the service change - for example if additional configuration data is needed or configuration data changes or if additional requirement settings are needed - the service sends an update message that comprises the changes to the service controller 100. The service controller 100 can then acknowledge the message and adapt the relevant data accordingly.

Trust relation management: the service controller 100, in particular the trust relation management engine 125, manages the trust relation between all involved parties. Trust relation within this context means that managers security aspects that can comprise authentication, authorization and/or encryption. The service controller 100 is being configured to allow i) only authorized customers to discover and/or access a service, ii) only customers in specific networks to use the service; iii) instantiation of service only in a third-party network if mutual agreements between the network operator and the third-party network are existing.

Scheduling: the service controller 100 is being configured to provide the functionality that allows to schedule requested services or task based on different capabilities or QoS requirements. For example, a requested computing service may have the requirements to be handled as cost-efficient as possible within the certain period of time. If this requested service is not time critical, the execution of the service can be scheduled to low traffic times or it is possible to run the service on a server with lower computational capacity. Low traffic times, that typically occur during night shift, generally have lower energy costs and the network is not bloated as much as within heavy busy hour traffic times.

Furthermore, the service controller 100 is designed in a flexible way so that any further necessary control and/or management functionality can be added to the service controller 100, in particular by updating the existing engines or by implementing new engines.

Another aspect of the invention is the concept of service federation. Within the context of this invention service federation is to be understood as being the ability to make services, which are available in a first network of a first network operator known and/or available to a second network officer second network operator or even to users in the first network and to users in the second network. For that purpose, the service controllers in the first and the second network serves as the coordinating endpoint to manage the tasks related to requested service.

Enablers for service federation:
i) coupling of network layer and service layer: to enable the service federation, the network layer and the service layer need to interact very closely to allow the provision of service related information on the network layer (e.g. the service controller endpoint address at network registration of the user).
ii) automated trust relationship: to enable a highly flexible and automated way of service federation, the establishment of a two-way-trust-relation as a part of the registration procedures is important.. For future service federation scenarios according to a two-way-trust-relation scheme, the network operator is to be authenticated with respect towards the user device 405 of the user, towards the service provider and/or towards further network operator so that the network can be trusted. This is the case if the network provides the requested service.

The service controller can provide availability and/or registration information of the services to all subscribed and/or authenticated networks, users, user equipment and also to other services. Based on this trust relation and on the configuration of the requested services, allowed parties can receive information about services. Fig. 6 shows another embodiment of the communication system 200 to illustrate the aspect of the service federation.

Fig. 6 shows the service controller 100 as a part of the network 600 of the network operator 205. The service controller 100 comprises the same components as described in Fig. 1.

In addition, Fig. 6 shows:
- the second communication interface 225 of the service controller 100 to the service layer of the network operator 205. The network operator 25 provides the services "service 1 to service n".
- the third communication interface 265 of the service controller 100 to the UE 405 over a first network link 605.
- The fourth communication interface 610 to service controller 100a of the further network operator 615, wherein the further network operator 615 provides the "service z";
- still another communication interface 620 an external service provider 625, wherein the external provides the services "service 1 to service n".

Any service provider 625 or further network operator 615 can subscribe to receive service federation by the service controller 100 of the network operator 205. Preferably, this is based on mutual agreements done before or by enabling establishment of automated trust relations.

In principle it is possible that the UE 405 can use any service provided by either the network operator 205, the service provider 625 or the further network operator 615. In particular, the different service controllers 100, 100a can communicate with each other to exchange the service related data.

To enable service federation can comprise: i) to make own services known to users and further networks; ii) to provide communication and interworking of the different service controllers 100, 100a; iii) to provide a service search functionality over all the participating network operators and/or service providers; vi) to provide notification mechanism (in particular if new services are implemented or if services are changed), v) to be able to request services beyond network borders (i.e. From another operator's service portfolio) and/or vi) to be able to control instantiated service in other networks (together with the SC of the visited network).

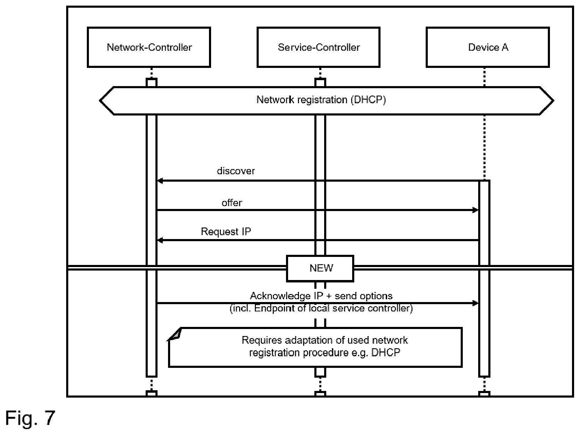

Fig. 7 shows a preferred embodiment of the inventive method in a nutshell. Since all the aspects have been described in detail before, Fig. 7 needs no further explanation but serves the purpose of summarizing the preferred embodiment of the invention according to Fig. 7 visually.

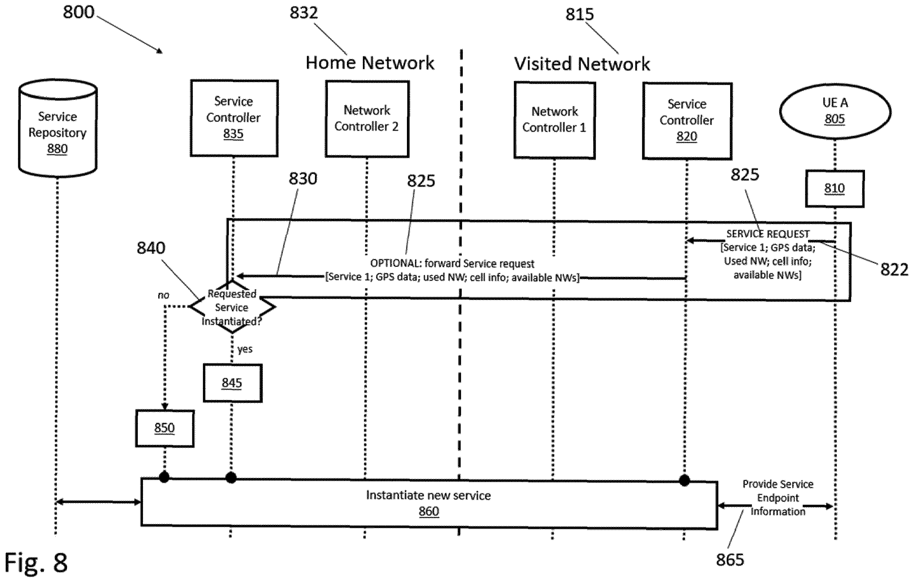

Fig. 8 describes a method to instantiate the service according to the invention. If the functional technical units described within the context of Fig. 8 are labeled with different reference signs as in the figures described above, this has no influence regarding the technical meaning of those functional units if no different technical meaning is being described within the context within Fig. 8. Hence, the different reference signs only indicates that the functional units are associated with a different embodiment of the invention.

Fig. 8 shows a communication system 800 that comprises a UE 805 of the user, wherein the UE can be a smart phone, a tablet, a computer or the like.

The UE 805 can perform in step 810 a network registration and/or security procedures as described above, so that communication endpoints of service controllers are known by the UE 805. In the embodiment of fig. 8, the UE 805 is connected to a visited network 815 and has knowledge about the communication address of service controller 820 of the visited network 815. The UE 805 sends a service request message 825 via the first communication link to the service controller 820 in step 822. The service request message 825 is being extended by suitable parameters to be able to provide location and/or infrastructure parameters of the actual location of the UE 805. In particular, the infrastructure parameters comprise information about available networks at the location of the UE 805. The parameters can be a) GPS data; b) used network type like 4G, 5G, 6G, W-LAN; c) used network names like MNC, MNN or network ID; d) cell information like the cell ID or any of the cell information that could be of interest; e) other available networks, for example if the user is connected to a 3G mobile network and provides information about the availability of a WLAN. Hence, the parameters can be described as being the i) location information of the UE and/or ii) network information of the UE. In step 830, this service request message 825 can be forwarded to a service controller 835 of a home network 840 of the user.

In step 840: the service controller 820, 835 checks if the service is already instantiated. If the service is already instantiated, the method proceeds with step 845, and otherwise with step 850.

Step 845: the service controller 820, 835 decides based on service parameters, if it is necessary to instantiate the service at a different location than the already instantiated one and outputs this location information and communicates it with a service repository 880 as to provide the necessary software for the process of instantiation. The service repository 880 is the functional unit, in particular in the embodiment of the database, that holds the software of the service that needs to be instantiated in the case that the service is requested and not yet deployed. In the embodiment of Fig. 8, the necessary service software package is stored in the service repository 880 of the home network 840. This decision algorithm of the service controller 835, 820 can also take other parameters like energy efficiency, cost of different locations, type of available networks into account. If the already instantiated service is fine to be used, the service controller 835 communicates the service endpoint of the requested services to the UE 805 via the service controller 820 in the visited network 815.

In step 850: Based on the parameters, the service controller 820 of the visited network 805 and/or the service controller 835 of the home network 840 can evaluate and make the decision where to instantiate the requested service, for example in the home network 840, the visited network 815 or may be in any potential other (transit) network. This decision algorithm of the service controller 835, 820 can also take other parameters like energy efficiency, cost of different locations, type of available networks into account. As described in step 845, after the location where to instantiate the service has been determined, the necessary software packages can be retrieved from the service repository 880.

Step 860: the new service is being instantiated and in step 865 the communication endpoint of the new service is being transmitted to the UE 805 so that it can use the service.

## Claims

1. A method for providing a service to a user equipment, the service being provided by a network operator and/or a service provider, the method comprising the steps of:
• Providing a communication link between a network (815, 832) of a network operator and a UE;
• Transmitting a service request (825) of a UE (805) to a network operator, wherein the service request comprises i) location information of the UE and/or ii) network information of the UE;
• Using the i) location information of the UE and/or ii) the network information of the UE (805) to determine the location where to instantiate the service or to determine the location of an already instantiated service that shall be used.

2. The method of any of the claims, wherein the service is instantiated within a network federation environment.

3. The method of any of the claims, wherein the network operator is a home network or a visited network operator (815).

4. The method of claim 3, wherein the service request is transmitted to a service controller, wherein the service controller is associated to the home network (832) or to the visited network (815).

5. The method of any of the claims, wherein the service request message (825) comprises service information, and wherein the service information is taken into account regarding the decision where to instantiate the service or which already instantiated service shall be used.

6. The method of any of the claims, wherein the i) location information of the UE and/or ii) the network information of the UE comprises GPS data of the UE.

7. The method of any of the claims, wherein the i) location information of the UE and/or ii) the network information of the UE comprises used types of networks by the UE and/or available types of network for the UE.

8. The method of any of the claims, wherein the i) location information of the UE and/or ii) the network information of the UE comprises network IDs.

9. The method of any of the claims, wherein the i) location information of the UE and/or ii) the information of available networks comprises cell information.

10. The method of any of the claims, wherein a blacklist, in particular a location and/or network blacklist, is taken into account regarding to determine where to instantiate the service.

11. The method of claim 10, wherein the service, the UE and/or the network operator provides the blacklist.

12. The method of any of the claims, wherein the service is instantiated at a location as to optimize resources of the network operator, to fulfill QoS requirements and/or to fulfill trust relation requirements.

13. The method of any of the claims, wherein the i) location information of the UE and/or ii) the network information of multiple users requesting the service are taken into account to determine the location where to instantiate the service.

14. A service controller for providing a service to a user equipment, wherein the service controller comprises:
• a first communication interface to a network layer of the network operator;
• a second communication interface to a service layer, in particular a service layer of the network operator;
• a third communication interface to a user equipment, and wherein the service controller is arranged
• to receive a service request of a UE to a network operator, wherein the service request comprises i) location information of the UE and/or ii) network information of the UE;
• to use the i) location information of the UE and/or ii) the network information of the UE to determine the location where to instantiate the service or to determine the location of an already instantiated service that shall be used.

15. A user equipment configured to participate to the method of claim 1, wherein the user equipment is designed to at least send a service request of a UE to a network operator, wherein the service request comprises i) location information of the UE and/or ii) network information of the UE;

## Amended claims

### Amended claims in accordance with Rule 137(2) EPC.

1. A method for providing a service to a user equipment, the service being provided by a network operator and/or a service provider, the method comprising the steps of:
• Providing a communication link between a network (815, 832) of a network operator and a UE;
• Transmitting a service request (825) of a UE (805) to a network operator, wherein the service request comprises i) location information of the UE and/or ii) network information of the UE;
• Using the i) location information of the UE and/or ii) the network information of the UE (805) to determine the location where to instantiate the service or to determine the location of an already instantiated service that shall be used.

2. The method of the claim 1, **characterized by** instantiating the service within a network federation environment.

3. The method of any of the claims, **characterized by** taking the home network or visited network operator (815) as a network operator.

4. The method of claim 3, wherein the service request is transmitted to a service controller, wherein the service controller is associated to the home network (832) or to the visited network (815).

5. The method of any of the claims, wherein the service request message (825) comprises service information, and wherein the service information is taken into account regarding the decision where to instantiate the service or which already instantiated service shall be used.

6. The method of any of the claims, wherein the i) location information of the UE and/or ii) the network information of the UE comprises GPS data of the UE.

7. The method of any of the claims, wherein the i) location information of the UE and/or ii) the network information of the UE comprises used types of networks by the UE and/or available types of network for the UE.

8. The method of any of the claims, wherein the i) location information of the UE and/or ii) the network information of the UE comprises network IDs.

9. The method of any of the claims, wherein the i) location information of the UE and/or ii) the information of available networks comprises cell information.

10. The method of any of the claims, wherein a blacklist, in particular a location and/or network blacklist, is taken into account regarding to determine where to instantiate the service.

11. The method of claim 10, wherein the service, the UE and/or the network operator provides the blacklist.

12. The method of any of the claims, wherein the service is instantiated at a location as to optimize resources of the network operator, to fulfill QoS requirements and/or to fulfill trust relation requirements.

13. The method of any of the claims, wherein the i) location information of the UE and/or ii) the network information of multiple users requesting the service are taken into account to determine the location where to instantiate the service.

14. A service controller for providing a service to a user equipment, wherein the service controller comprises:
• a first communication interface to a network layer of the network operator;
• a second communication interface to a service layer, in particular a service layer of the network operator;
• a third communication interface to a user equipment,
and wherein the service controller is arranged
• to receive a service request of a UE to a network operator, wherein the service request comprises i) location information of the UE and/or ii) network information of the UE;
• to use the i) location information of the UE and/or ii) the network information of the UE to determine the location where to instantiate the service or to determine the location of an already instantiated service that shall be used.

15. A user equipment configured to participate to the method of claim 1,
wherein the user equipment is designed to at least send a service request of a UE to a network operator, wherein the service request comprises i) location information of the UE and ii) network information of the UE, **characterized in that**
the network information of the UE comprises used types of networks by the UE and/or available types of networks for the UE.
